# EUROPÄISCHE PATENTANMELDUNG

(11) **EP 4 819 427 A1**
(43) Veröffentlichungstag der Anmeldung: **07.10.2026**
(21) Anmeldenummer: 25167624.3
(22) Anmeldetag: 01.04.2025
(51) Int. Cl.: H02J 3/14, C25B 1/02, C25B 15/02

(54) **STEUERUNGSVERFAHREN FÜR EINE ELEKTROLYSE-ANLAGE**

(71) Anmelder: Sunfire SE, 01237 Dresden (DE)
(72) Erfinder: Kämmer, Robert, 01067 Dresden (DE); Seitz, Markus, 01277 Dresden (DE); Struwe, Kim Daniel, 60528 Frankfurt am Main (DE); Friedrich, Christian, 01129 Dresden (DE)
(74) Vertreter: Epping - Hermann - Fischer

(57) **Zusammenfassung**

Die vorliegende Erfindung betrifft ein Steuerungsverfahren zur Einstellung der Auslastung einer Elektrolyse-Anlage (1) mittels einer zentralen Anlagensteuerung (5),
wobei die Anlagensteuerung (5) so beschaffen ist,
dass zu einem Zeitpunkt t0 innerhalb der physikalischen Grenzen Lmin bis Lmax der Elektrolyse-Anlage (1) eine maximale zur Verfügung stehende Kapazität Lplant der Elektrolyse-Anlage (1) für erste diskrete Zeitabschnitte eines Zeitintervalls t1 bis t2 als ein erster Sollwert einstellbar ist,
dass zu dem Zeitpunkt t0 innerhalb der maximal zur Verfügung stehenden Kapazität Lplant die Auslastung der Elektrolyse-Anlage (1) Splant für zweite diskrete Zeitabschnitte eines Zeitintervalls ta bis t2 als ein zweiter Sollwert einstellbar ist,
wobei t2≥t1>ta≥t0 gilt, und wobei eine elektrische Leistung oder eine Menge an Wasserstoff der Anlagensteuerung (5) als der erste und der zweite Sollwert vorgegeben wird.

## Beschreibung

Die vorliegende Erfindung betrifft ein Steuerungsverfahren zur Einstellung der Auslastung einer Elektrolyse-Anlage.

Moderne Anlagen zur Elektrolyse sind wünschenswerterweise skalierbar aufgebaut, um die von den Betreibern vorgegebenen Kapazitäten zu erreichen (z.B. Umwandlung einer definierten zur Verfügung stehenden elektrischen Leistung oder Herstellung einer bestimmten Menge an Wasserstoff).

Dabei wird nicht etwa nur die Größe der einzelnen Elektrolyseure den vorgegebenen Kapazitäten angepasst, sondern es werden Flotten bereitgestellt, die eine hohe Anzahl an einzelnen Elektrolyseuren aufweisen.

Bevorzugt sind eine definierte Anzahl von Elektrolyseuren jeweils wieder Modulen zugeordnet, die die Anzahl an Elektrolyseuren mit gemeinsamer Peripherie umfasst.

Herkömmlich ist jedes dieser Module mit einer separaten Modulsteuerung versehen.

Bei den Flotten, die zahlreiche Module umfassen, stellt sich somit die Aufgabe eine übergeordnete Flotten- oder Anlagensteuerung bereitzustellen, die die In- und Außerbetriebnahme der einzelnen Module bzw. Elektrolyse-Einheiten kontrolliert.

Die vorliegende Erfindung betrifft ein solches Steuerungsverfahren zur Einstellung der Auslastung einer Elektrolyse-Anlage mittels einer zentralen Anlagensteuerung (im Folgenden auch nur Steuerung).

Der Umfang der Erfindung wird durch die Ansprüche definiert.

Die Elektrolyse-Anlage (im Folgenden auch nur Anlage) umfasst bevorzugt mehrere Elektrolyse-Einheiten, wobei mehrere Elektrolyse-Einheiten zu einem Elektrolyse-Modul (im Folgenden auch nur Modul) zusammengefasst sind, die sich eine Modulperipherie teilen.

In anderen Worten, die Elektrolyse-Anlage umfasst bevorzugt mehrere Module, die eine oder mehrere Elektrolyse-Einheiten und eine Modulperipherie umfassen.

Die Modulperipherie umfasst bevorzugt insbesondere die Stromversorgung, Gasversorgung und Heizung oder Kühlung der Elektrolyse-Einheiten.

Ein Modul kann weiterhin eine eigene Modulsteuerung aufweisen, die wiederum von der Anlagensteuerung ansteuerbar ist.

Bei den Elektrolyse-Einheiten kann es sich insbesondere um alkalische Elektrolyse-Einheiten oder um Festoxid-Elektrolyse-Einheiten handeln.

Die Anlagensteuerung ist so beschaffen, dass zu einem Zeitpunkt t0 (aktueller Zeitpunkt) innerhalb der physikalischen Grenzen Lmin bis Lmax der Elektrolyse-Anlage eine maximale zur Verfügung stehende Kapazität Lplant der Elektrolyse-Anlage für erste diskrete Zeitabschnitte eines Zeitintervalls t1 bis t2 als ein erster Sollwert einstellbar ist.

Die Kapazität kann anhand einer in die Anlage eingebrachten elektrischen Leistung oder einer von der Anlage herzustellenden Menge an Wasserstoff angegeben, bestimmt, gemessen und kontrolliert werden.

In anderen Worten, die Elektrolyse-Anlage hat eine minimale Kapazität Lmin, also eine Kapazität, bei der die Elektrolyse-Anlage aus physikalischen Gründen mindestens betrieben werden muss, um technisch zu funktionieren.

Die Elektrolyse-Anlage hat weiterhin eine maximale Kapazität Lmax, also eine Kapazität, die die Elektrolyse-Anlage physikalisch maximal technisch erreichen kann, wenn alle verfügbaren Elektrolyse-Einheiten der Elektrolyse-Anlage in Betrieb sind. Nicht verfügbar sind z.B. funktional kaputte Elektrolyse-Einheiten oder solche, die sich in Reparatur oder Wartung befinden.

Nicht zu jedem Zeitpunkt ist es jedoch möglich oder erforderlich, dass alle Elektrolyse-Einheiten betriebsbereit sind, z.B., da bereits zum Zeitpunkt t0 abzusehen ist, dass im Intervall t1 bis t2 nicht genügend elektrische Leistung zur Verfügung steht oder nicht die volle Kapazität an Wasserstoffproduktion benötigt werden wird.

Daher ist es über die Anlagensteuerung möglich zu dem Zeitpunkt t0 für das zeitlich spätere Zeitintervall t1 bis t2 für jeden einzelnen diskreten Zeitabschnitt des Zeitintervalls jeweils eine maximale zur Verfügung stehende Kapazität Lplant der Anlage als einen ersten Sollwert einzustellen.

Die ersten diskreten Zeitabschnitte können z.B. Intervalle von jeweils 10 bis 45 Minuten, bevorzugter 10 bis 30 Minuten, besonders bevorzugt 15 bis 20 Minuten sein.

Abhängig von der eingestellten maximal zur Verfügung stehenden Kapazität Lplant der Anlage wird eine entsprechende Anzahl an Elektrolyse-Einheiten mit der benötigten Kapazität durch die Anlagensteuerung zu den diskreten Zeitabschnitten des Zeitintervalls t1 bis t2 in einen betriebsbereiten Zustand versetzt.

Weiterhin ist durch die Anlagensteuerung zu dem Zeitpunkt t0 innerhalb der maximal zur Verfügung stehenden Kapazität Lplant die Auslastung der Elektrolyse-Anlage Splant für zweite diskrete Zeitabschnitte eines Zeitintervalls ta bis t2 als ein zweiter Sollwert einstellbar.

Mit anderen Worten, innerhalb der zu Verfügung stehenden Kapazität Lplant wird die tatsächlich erforderliche Auslastung der Elektrolyse-Anlage Splant eingestellt, in dem entsprechend Elektrolyse-Einheiten in den (aktiven) Betriebszustand versetzt werden.

Zum Zeitpunkt t0 kann Splant für die zweiten diskreten Zeitabschnitte des Intervalls ta bis t1 eingestellt werden, wobei t2>t1>ta≥t0 gilt. Bevorzugt sind beide Zeitintervalle ta bis t1 und t1 bis t2 gleich groß, z.B. jeweils 12 h (wobei "h" in diesem Text für Stunden steht).

Die zweiten diskreten Zeitabschnitte können so lange wie die ersten diskreten Zeitabschnitte oder kürzer sein (z.B. 5 bis 15 min, wobei "min" in diesem Text für Minuten steht).

Das heißt, für ein zeitnahes Intervall ta bis t1 ist es zum Zeitpunkt t0 über die Anlagensteuerung möglich, die konkrete Auslastung der Anlage einzustellen, für ein zeitlich folgendes Intervall t1 bis t2 ist es immerhin möglich die zur Verfügung stehende Kapazität der Anlage einzustellen.

Somit ist eine intelligente und vorausschauende Einstellung der Anlagenkapazität und -Auslastung über die Steuerung möglich. Insbesondere kann die Anlage vorteilhaft, je nach Wunsch, möglichst lebenszeitschonend, möglichst dynamisch oder möglichst effektiv betrieben werden (siehe auch weiter unten).

Entweder die elektrische Leistung oder eine Menge an (zu produzierendem) Wasserstoff kann der Anlagensteuerung als der erste und der zweite Sollwert vorgegeben werden.

Insbesondere, wenn die elektrische Leitung als Sollwert vorgegeben ist, kann ta gleich t0 sein (ta=t0), da es kaum oder nicht zu Zeitverzögerungen bei der Einstellung der Anlage durch die Anlagensteuerung kommt.

Insbesondere, wenn die zu produzierende Wasserstoffmenge als ein Sollwert vorgegeben ist, ist ta größer als t0 (ta>t0), um der Anlage Zeit zum Hochfahren/Herunterfahren der entsprechenden Elektrolyse-Anlagen zu geben.

Bevorzugt ist die Anlagensteuerung so umschaltbar, sodass entweder eine elektrische Leistung oder eine Menge an Wasserstoff der Anlagensteuerung als der erste und der zweite Sollwert vorgegeben werden kann.

Dies macht die Ansteuerung der Anlage vorteilhaft flexibler.

Gemäß einer Ausführung kann die Anlagensteuerung abhängig von dem eingestellten ersten Sollwert für die ersten diskreten Zeitabschnitte einen Zustand einer erforderliche Anzahl an Elektrolyse-Einheiten von einem nicht-betriebsbereiten kalten Standby-Zustand in einen betriebsbereiten warmen Standby-Zustand mit oder ohne Betriebsdruck zum Erhöhen der Kapazität Lplant versetzen oder auch umgekehrt von dem betriebsbereiten warmen Standby-Zustand mit oder ohne Betriebsdruck in den nicht-betriebsbereiten kalten Standby-Zustand zum Absenken der Kapazität Lplant versetzen.

Ein Standby-Zustand ist dabei ein Zustand, zu dem die Elektrolyse-Einheit nicht in Betrieb ist, also keinen Wasserstoff produziert und wobei keine Betriebsspannung angelegt ist. Die Elektrolyse-Einheiten sind jedoch durch die Anlagensteuerung ansteuerbar und somit prinzipiell, mit einer gewissen Anlaufzeit, betriebsbereit.

Ein Betriebszustand ist im Unterschied dazu der aktive Zustand der Elektrolyse-Einheiten, während dem diese Wasserstoff produzieren und unter einer elektrischen Betriebsspannung stehen. Die Elektrolyse-Einheiten weisen weiterhin eine (warme) Betriebstemperatur und einen (hohen) Betriebsdruck auf.

Alle Elektrolyse-Einheiten im Betriebszustand oder im Standby-Zustand bilden die gesamte Kapazität Lmax der Anlage. Auf ausgeschaltete Elektrolyse-Einheiten kann die Anlagensteuerung nicht zugreifen und diese zählen daher nicht zur maximalen Kapazität Lmax.

Die Elektrolyse-Einheiten im Standby-Zustand können z.B. kalt sein, das heißt kälter als im Betriebszustand, und nicht unter Betriebsdruck stehen, sondern unter einem niedrigeren Druck. Dies entspricht dem nicht-betriebsbereiten kalten Standby-Zustand. Es dauert vergleichsweise lange, die Elektrolyse-Einheiten aufzuwärmen und somit in einen betriebsbereiten warmen Standby-Zustand zu überführen. Diese Aufwärmzeit definiert eine Untergrenze für die Zeit t1.

Elektrolyse-Einheiten im nicht-betriebsbereiten kalten Standby-Zustand zählen daher nicht zur zu Verfügung stehenden Kapazität Lplant der Anlage.

Unter "nicht-betriebsbereit" wird im vorliegenden Text wie an verschiedenen Stellen beschrieben insbesondere nicht sofort betriebsbereit gemeint. Die nicht-betriebsbereiten Elektrolyse-Einheiten sind bevorzugt mit ausreichend zeitlichem Vorlauf ohne Einschränkungen in den Betriebszustand überführbar.

Das Aufbauen des Betriebsdrucks im warmen Standby-Zustand dauert vergleichsweise kurz. Dieser Zeitraum kann eine Mindestzeitspanne für ein mögliches mindestes ta definieren. Durch das Anlegen der elektrischen Betriebsspannung sind die Elektrolyse-Einheiten dann direkt in den Betriebszustand überführbar.

Elektrolyse-Einheiten im betriebsbereiten warmen Standby-Zustand zählen daher zur verfügbaren Kapazität Lplant unabhängig ob mit oder ohne Betriebsdruck, also ob die Elektrolyse-Einheiten unter Betriebsdruck stehen oder nicht.

Welche der Elektrolyse-Einheiten von der Anlagensteuerung für den Wechsel des Zustands ausgewählt werden, richtet sich an aktuellen Leistungs- und Betriebsmerkmalen der Elektrolyse-Einheiten aus, wie z.B. Degradation oder Temperatur. Mit anderen Worten, Elektrolyse-Einheiten mit hoher Degradation (also nur noch kurzer Lebensdauer) oder niedriger Temperatur werden bevorzugt zuerst in den kalten Standby-Zustand überführt und umgekehrt.

Gemäß einer Ausführung versetzt die Anlagensteuerung entsprechend abhängig von dem eingestellten zweiten Sollwert für die zweiten diskreten Zeitabschnitte eine erforderliche Anzahl an Elektrolyse-Einheiten von dem betriebsbereiten warmen Standby-Zustand mit oder ohne Betriebsdruck in einen Betriebszustand zum Erhöhen der Auslastung Splant oder von dem Betriebszustand in den betriebsbereiten warmen Standby-Zustand mit oder ohne Betriebsdruck zum Absenken der Auslastung Splant.

Zur Auslastung Splant zählen also nur Elektrolyse-Einheiten im Betriebszustand (und auch nur ihrer tatsächlichen Auslastung).

Die jeweilige Auswahl der Elektrolyse-Einheiten für den Wechsel des Zustands richtet sich wiederum an den aktuellen Leistungs- und Betriebsmerkmalen der Elektrolyse-Einheiten aus.

So werden z.B. Elektrolyse-Einheiten, die schon/noch unter Betriebsdruck stehen, bevorzugt zuerst in den Betriebszustand überführt, da dies An- und Abfahrzeiten und -Aufwand, z.B. zur Einstellung des Betriebsdrucks erspart. Bei Senkung von Splant werden die Elektrolyse-Einheiten umgekehrt bevorzugt zuerst in den warmen Standby-Zustand unter Betriebsdruck versetzt und sind somit sofort wieder betriebsbereit. Bevorzugt wird die Elektrolyse-Einheit dabei aus der Volllast (Sunit bei 100 % Auslastung) heraus in den warmen Standby-Zustand unter Betriebsdruck versetzt.

Allgemein werden Elektrolyse-Einheiten mit hoher Degradation bevorzugt zuerst außer Betrieb genommen.

Gemäß einer Ausführung stellt die Anlagensteuerung abhängig von dem eingestellten zweiten Sollwert eine erforderliche Auslastung Sunit der einzelnen im Betriebszustand befindlichen Elektrolyse-Einheiten ein.

Die Summe der Auslastungen Sunit aller Elektrolyse-Einheiten im Betriebszustand ergibt dann Splant. Die übrige Kapazität der Elektrolyse-Einheiten im Betriebszustand über Sunit hinaus zählt zu Kplant.

Das Betreiben vieler Elektrolyse-Einheiten bei geringer Kapazität führt daher zu hoher dynamischer Flexibilität bei der Anlagensteuerung (Kplant hoch im Vergleich zu Splant).

Gemäß einer Ausführungsform ist ein erster Steuerungsmodus der Anlagensteuerung einstellbar, sodass die Anlagensteuerung so viele Elektrolyse-Einheiten in den Betriebszustand versetzt, dass die Auslastung Sunit möglichst vieler der im Betriebszustand befindlichen Elektrolyse-Einheiten auf eine vorgegebene minimale Auslastung Smin einstellbar ist und/oder die Auslastung Sunit der im Betriebszustand befindlichen Elektrolyse-Einheiten möglichst nah an dieser vorgegebenen minimalen Auslastung Smin einstellbar ist.

Die minimale Auslastung Smin kann ein vorgegebener Wert oder der tatsächlich minimale Betriebspunkt der Elektrolyse-Einheit sein. Bevorzugt beträgt Seff zwischen 5 und 40 % einer möglichen Maximalauslastung der Elektrolyse-Einheit.

So kann eine maximale dynamische Flexibilität bei der Anlagensteuerung erreicht werden (Kplant sehr hoch im Vergleich zu Splant). Die Erhöhung der Auslastung der Anlage durch die Erhöhung der Auslastung einer Elektrolyse-Einheit im Betrieb ist vorteilhafterweise nochmals schneller möglich als die Erhöhung der Auslastung der Anlage durch Inbetriebnahme weiterer Elektrolyse-Einheiten.

Gemäß einer Ausführungsform ist ein zweiter Steuerungsmodus der Anlagensteuerung einstellbar, sodass die Anlagensteuerung so viele Elektrolyse-Einheiten in den Betriebszustand versetzt, dass die Auslastung Sunit möglichst vieler der im Betriebszustand befindlichen Elektrolyse-Einheiten auf eine vorgegebene effiziente Auslastung Seff einstellbar ist und/oder die Auslastung Sunit der im Betriebszustand befindlichen Elektrolyse-Einheiten möglichst nah an dieser und/oder möglichst nah an dieser, aber unterhalb dieser, vorgegebenen effizienten Auslastung Seff einstellbar ist.

Die effiziente Auslastung Seff kann ein vorgegebener Wert oder der tatsächlich effizienteste Betriebspunkt der Elektrolyse-Einheit sein. Bevorzugt beträgt Seff mehr als 40 %, bevorzugter zwischen 50 und 75 % einer möglichen Maximalauslastung der Elektrolyse-Einheit.

So kann möglichst effizient, also mit möglichst wenig Energieeinsatz möglichst viel Wasserstoff produziert werden.

Gemäß einer Ausführungsform ist ein dritter Steuerungsmodus einstellbar, wobei die Anlagensteuerung so viele Elektrolyse-Einheiten in den Betriebszustand versetzt, dass die Auslastung Sunit möglichst vieler der im Betriebszustand befindlichen Elektrolyse-Einheiten auf eine vorgegebene maximale zulässige Auslastung Smax einstellbar ist und/oder die Auslastung Sunit der im Betriebszustand befindlichen Elektrolyse-Einheiten möglichst nah an dieser vorgegebenen maximale Auslastung Smax einstellbar ist.

Die maximale Auslastung Smax kann ein vorgegebener Wert oder der tatsächlich maximale Betriebspunkt der Elektrolyse-Einheit sein. Bevorzugt beträgt Smax mehr als 75 %, bevorzugter zwischen 85 und 100 % einer möglichen Maximalauslastung der Elektrolyse-Einheit.

So kann mit möglichst wenigen Elektrolyse-Einheiten Wasserstoff produziert werden, sodass die Degradation von Elektrolyse-Einheiten der Anlage minimiert wird.

Gemäß Ausführungsformen sind mehrere Elektrolyse-Einheiten zu einem Elektrolyse-Modul zusammengefasst, wobei die Anlagensteuerung gemäß einem Steuerungskonzept Elektrolyse-Einheiten möglichst weniger unterschiedlicher Elektrolyse-Module in den Betriebszustand versetzt, da somit eine möglichst große Anzahl an Modulen geschont und nicht durch Betrieb oder auch nur An- und Abschalten, Aufwärmen/Abkühlen etc. degradiert wird. Sobald nur eine Elektrolyse-Einheit eines Moduls in Betrieb genommen wird, muss nämlich in der Regel auch die gesamte Peripherie des Moduls in Betrieb genommen werden, was zusätzlich auch einen erhöhten Energieaufwand bedeutet.

Auch der Energieaufwand kann durch das beschriebene Steuerungskonzept also minimiert werden.

Dieses Steuerungskonzept ist somit insbesondere in Kombination mit dem dritten Steuerungsmodus oder auch dem zweiten Steuerungsmodus besonders vorteilhaft.

Gemäß einem alternativen Steuerungskonzept versetzt die Anlagensteuerung Elektrolyse-Einheiten möglichst vieler unterschiedlicher Elektrolyse-Module in den Betriebszustand.

Die Peripherie der entsprechenden Module ist dann schon in Betrieb. Die weiteren Elektrolyse-Einheiten derselben Module lassen sich dann schneller in den Betriebszustand überführen.

Das alternative Steuerungskonzept erhöht also die dynamische Flexibilität der Anlage und ist besonders vorteilhaft mit dem ersten Steuerungsmodus kombinierbar.

Gemäß einer Ausführung versetzt die Anlagensteuerung nach einer vorgegebenen maximalen Standbyzeit tmax die Elektrolyse-Einheiten im betriebsbereiten warmen Standby-Zustand unter Beibehaltung von Betriebsdruck automatisch zurück in den Betriebszustand und dafür, wenn erforderlich, andere Elektrolyse-Einheiten im Betriebszustand automatisch in den warmen Standby-Zustand unter Beibehaltung von Betriebsdruck.

Gemäß einer Ausführung versetzt die Anlagensteuerung in Abhängigkeit vorgegebener Grenzwerte für bestimmte Einheiten-Parameter die Elektrolyse-Einheiten im betriebsbereiten warmen Standby-Zustand mit/ohne Beibehaltung von Betriebsdruck automatisch zurück in den Betriebszustand und dafür, wenn erforderlich, andere Elektrolyse-Einheiten im Betriebszustand automatisch in den warmen Standby-Zustand, bevorzugt, zumindest zuerst, unter Beibehaltung von Betriebsdruck, oder umgekehrt.

Entsprechende Einheiten-Parameter werden dann bevorzugt direkt an den Elektrolyse-Einheiten durch entsprechende Sensorik überwacht. Zu diesen Einheiten-Parametern können z.B. eine gemessene Gasqualität/Gaskonzentration in Sauerstoff-Separatoren der Elektrolyse-Einheiten, ein Druck in den jeweiligen Elektrolyse-Einheiten, eine Temperatur in den jeweiligen Elektrolyse-Einheiten und/oder eine mechanische Verspannung der jeweiligen Elektrolyse-Einheiten zählen. Die Anlagensteuerung kann auch mehre der Einheiten-Paramater im Zusammenhang überwachen und dementsprechend Elektrolyse-Einheiten in den Betriebszustand oder den Standby-Zustand versetzten.

Somit kann vorteilhafterweise eine möglichst gleichmäßige Degradation der Elektrolyse-Einheiten erreicht werden. Weiterhin kann so sichergestellt werden, dass der Betriebsdruck in den Elektrolyse-Einheiten aufrecht erhalten wird.

Gemäß einer alternativen oder zusätzlichen Ausführung versetzt die Anlagensteuerung nach einer vorgegebenen Logik, wie z.B. einem Round-Robin-Verfahren, eine oder mehrere Elektrolyse-Einheiten im betriebsbereiten warmen Standby-Zustand in den Betriebszustand und dafür dieselbe Anzahl an Elektrolyse-Einheiten im Betriebszustand in den warmen Standby-Zustand unter Beibehaltung von Betriebsdruck versetzt.

Somit kann vorteilhafterweise eine möglichst gleichmäßige Degradation der Elektrolyse-Einheiten erreicht werden.

Die vorliegende Erfindung betrifft weiterhin eine Elektrolyse-Anlage wie in den Ansprüchen definiert.

Alle zuvor in Bezug auf das Verfahren definierten Merkmale können auch auf die Elektrolyse-Anlage als Vorrichtung zutreffen und umgekehrt.

Eine Elektrolyse-Anlage kann insbesondere eine Anlagensteuerung zur Einstellung der Auslastung der Elektrolyse-Anlage und weiterhin mehrere Elektrolyse-Einheiten umfassen.

Die Anlagensteuerung ist bevorzugt so beschaffen, dass zu einem Zeitpunkt t0 innerhalb der physikalischen Grenzen Lmin bis Lmax der Elektrolyse-Anlage eine maximale zur Verfügung stehende Kapazität Lplant der Elektrolyse-Anlage für erste diskrete Zeitabschnitte eines Zeitintervalls t1 bis t2 als ein erster Sollwert einstellbar ist, und dass weiterhin zu dem Zeitpunkt t0 innerhalb der maximal zur Verfügung stehenden Kapazität Lplant die Auslastung der Elektrolyse-Anlage Splant für zweite diskrete Zeitabschnitte eines Zeitintervalls ta bis t2 als ein zweiter Sollwert einstellbar ist, wobei t2>t1>ta≥t0 gilt.

Dabei wird eine umzuwandelnde elektrische Leistung oder eine Menge an zu produzierendem Wasserstoff der Anlagensteuerung als der erste und der zweite Sollwert vorgegeben.

Die Anlagensteuerung ist bevorzugt weiterhin so beschaffen, dass sie abhängig von dem eingestellten ersten Sollwert für die ersten diskreten Zeitabschnitte eine erforderliche Anzahl an Elektrolyse-Einheiten von einem nicht-betriebsbereiten kalten Standby-Zustand in einen betriebsbereiten warmen Standby-Zustand zum Erhöhen der Kapazität Lplant versetzt oder von dem betriebsbereiten warmen Standby-Zustand in den nicht-betriebsbereiten kalten Standby-Zustand zum Absenken der Kapazität Lplant versetzt.

Die Anlagensteuerung ist bevorzugt weiterhin so beschaffen, dass sie abhängig von dem eingestellten zweiten Sollwert für die zweiten diskreten Zeitabschnitte eine erforderliche Anzahl an Elektrolyse-Einheiten von dem betriebsbereiten warmen Standby-Zustand in einen Betriebszustand zum Erhöhen der Auslastung Splant versetzt oder von dem Betriebszustand in den betriebsbereiten warmen Standby-Zustand unter Beibehaltung von Betriebsdruck zum Absenken der Auslastung Splant versetzt.

Gemäß Ausführungsformen ist die Elektrolyse-Anlage eine alkalische Elektrolyse-Anlage oder eine Feststoffelektrolyse-Anlage.

Im Falle einer Feststoffelektrolyse-Anlage umfassen die Elektrolyse-Einheiten Stapel an Elektrolysezellen.

Bevorzugt sind jeweils eine definierte Anzahl an Elektrolyse-Einheiten in einem Elektrolyse-Modul zusammengefasst, wobei die Elektrolyse-Module weiterhin Modulsteuerungen aufweisen, durch die die Elektrolyse-Einheiten ansteuerbar sind, wobei die Modulsteuerungen wiederum durch die Anlagensteuerung ansteuerbar sind.

Weitere Ausführungsbeispiele werden im Folgenden in Bezug auf die Figuren erläutert, wobei die Erfindung nicht auf diese konkreten Beispiele beschränkt ist und die aufgeführten Merkmale beliebig geeignet kombinierbar sind.

Die Figuren zeigen:
Figur 1: zeigt eine schematische Übersicht über eine beispielhafte Elektrolyse-Anlage.
Figur 2: zeigt ein Diagramm, in dem die physikalischen Grenzen, sowie die der Anlagensteuerung vorgegebenen Sollwerte für die einzustellende Kapazität und die einzustellende Auslastung der Elektrolyse-Anlage in Bezug auf die elektrische Leistung (in Watt) in beispielhaften diskreten Zeitabschnitten dargestellt sind.
Figur 3: zeigt einen schematischen Überblick über die verfügbaren durch die Anlagensteuerung einstellbaren Zustände der Elektrolyse-Einheiten und deren Zusammenhänge.
Figur 4: zeigt einen schematischen Überblick über die durch die Steuerung eingestellten Zustände der Module und Elektrolyse-Einheiten einer beispielhaften Anlage zu einem exemplarischen Zeitpunkt und den Zusammenhang mit den der Steuerung vorgegebenen Sollwerte.
Figur 5: zeigt ein Diagramm mit der benötigten Anzahl an Elektrolyse-Einheiten bei definierter Anlagenauslastung Splant für verschiedene beispielhafte Steuerungsmodi.

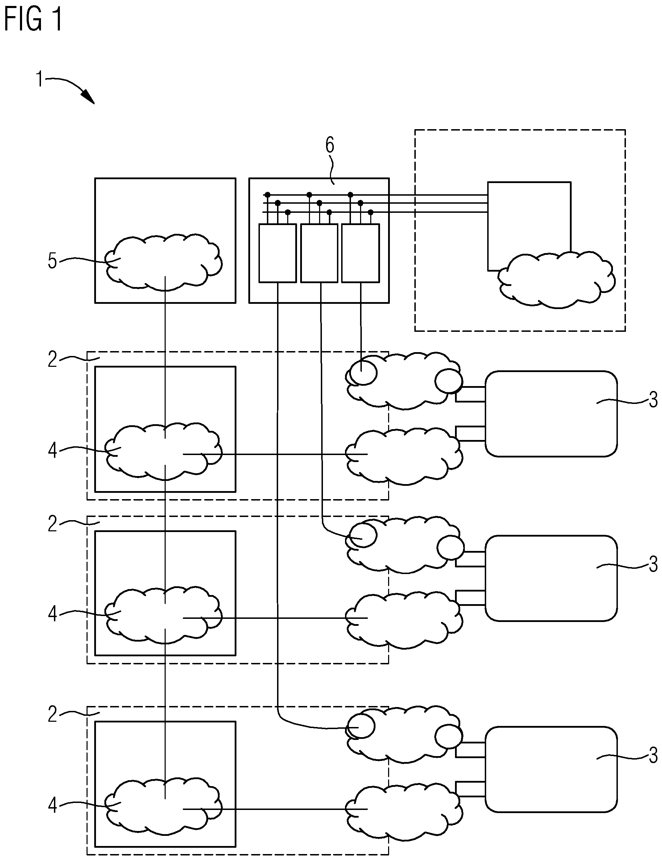

In Figur 1 wird ein Beispiel für eine Elektrolyse-Anlage (im folgenden nur Anlage) exemplarisch in einem Schema gezeigt. Die Elektrolyse-Anlage 1 (Anlage 1) umfasst eine beliebige Anzahl an Modulen 2. Ein Modul 2 umfasst wiederum eine bestimmte Anzahl an Elektrolyse-Einheiten 3 (im Folgenden nur Einheiten).

Bei der Anlage 1 kann es sich zum Beispiel um eine alkalische Elektrolyse-Anlage oder um eine Festoxid-Elektrolyse-Anlage handeln.

In einer alkalischen Elektrolyse-Anlage sind beispielsweise zwei, typischerweise zylinderförmige Einheiten 3 von einer gemeinsamen Peripherie umgeben.

Zu dieser Peripherie gehören z.B. Gas-Zu- und Abführungen, Elektrolyt-Zu- und Rückführung, Heizung, sowie eventuell Kühlung, thermische Isolation zur Umgebung, Sensorik und Regelungstechnik, die elektrische Versorgungsinfrastruktur, sowie eine Modulsteuerung.

Die zwei (es ist auch eine andere Zahl an Einheiten denkbar) Einheiten bilden somit ein Modul. Die gesamte Anlage kann aus einer beliebigen, skalierbaren Anzahl solcher Module bestehen, je nach erforderlicher Kapazität der Anlage.

Im weiteren beispielhaften Fall einer Festoxid-Elektrolyt-Anlage kann üblicherweise eine deutlich höhere Anzahl (als zwei) an Einheiten, die jeweils aus Stapeln aus Festoxid-Elektrolysezellen gebildet werden, ein Modul mit einer gemeinsamen Peripherie bilden.

Bei der Hochskalierung von Elektrolyse-Anlagen besteht die Notwendigkeit neben einzelnen Modulsteuerungen eine übergeordnete Anlagensteuerung oder Flottensteuerung (eine Flotte besteht aus mehreren Modulen) vorzusehen.

Jedes Modul verfügt weiter über seine Modulsteuerung, über die die Stellgrößen der einzelne Module 2 einstellbar sind. Die Modulsteuerungen, die in Figur 1 mit dem Bezugszeichen 4 versehen sind, werden wiederum von einer übergeordneten Anlagensteuerung 5 angesteuert.

Daneben können separate Steuerungsnetzwerke 6 als Sicherheitsnetzwerke vorhanden sein, die die Steuerung der Anlage 1 bzw. der Module im Notfall übernehmen (z.B. Notaus im Alarmfall).

Die neuen großen Flotten machen weiterhin neue Steuerungskonzepte für die Anlagen 1 erforderlich.

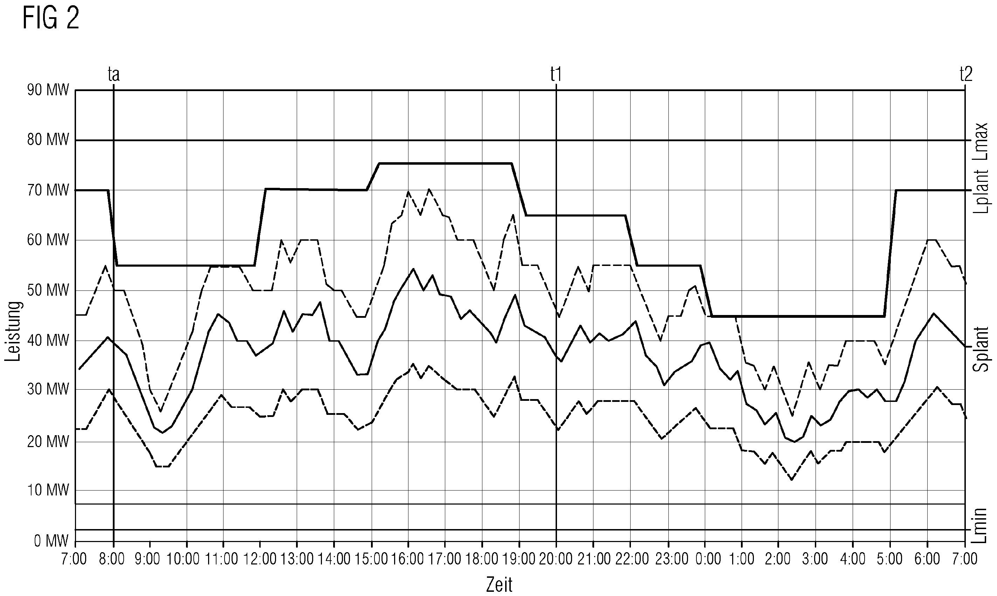

In Figur 2 ist nun anhand eines Diagramms beispielhaft dargestellt, wie ein Steuerungskonzept für eine solche Anlage 1 mit einer großen Anzahl an Modulen, beispielsweise bis zu 100 Modulen 2, aussehen könnte.

Im Diagramm in Figur 2 ist dargestellt, wie sich die zugeführte elektrische Leistung in Megawatt (MW) einer beispielhaften Anlage (z.B. Anlage 1) über eine Zeit, dargestellt als Uhrzeit in Stunden, verändert.

Stattdessen könnte auch die hergestellte Menge an Wasserstoff H2 dargestellt sein. Beide Größen können voreingestellt und geregelt werden und verhalten sich analog zueinander. Eine Regelung der elektrischen Leistung kann jedoch i.d.R.

schneller erfolgen als eine Regelung der Wasserstoffproduktion, da diese neben der Leistung auch von anderen Stellgrößen (z.B. Feed-Gas, Elektrolyt) abhängt.

Zum einen sind die physikalischen Grenzen der Anlage eingezeichnet. Die Anlage weist sowohl eine physikalisch beschränkte maximal einstellbare Leistung Lmax wie auch eine physikalisch beschränkte minimal mögliche einstellbare Leistung Lmin auf.

Der Wert Lmax begrenzt die maximal mögliche einstellbare leistungs-Kapazität (im Folgenden nur Kapazität) der Anlage.

Zu der maximal physikalischen möglichen Leistung Lmax zählen wie oben beschrieben die Leistungen aller Einheiten, die von der Anlagensteuerung aktivierbar, also theoretisch in einen Betriebszustand überführbar sind. Nicht dazu zählen nicht betriebsbereite, da nicht funktionierende oder gänzlich von der Anlagensteuerung getrennte Einheiten oder Module. Beispielsweise solche Einheiten oder Module, die sich in Reparatur der Wartung befinden oder die technisch nicht (mehr) funktionsfähig (kaputt) sind.

Im vorliegenden Beispiel beträgt eine maximal mögliche Leistung Lmax der Anlage 80 MW. Eine minimale mögliche Leistung Lmin der Anlage beträgt 2,5 MW. Diese minimale mögliche Leistung entspricht der Leistung, wenn nur eine einzige Einheit der Anlage bei minimaler Last Smin betrieben wird.

Ein Betrieb der Anlage bei geringerer Auslastung ist nicht möglich, da jede Einheit im Betrieb technisch bedingt mit einer minimalen Auslastung Smin betrieben werden muss.

Die Grenzen Lmin und Lmax sind als durchgezogene Linien oben und unten im Diagramm dargestellt.

Weiterhin ist im Diagramm die für erste diskrete Zeitabschnitte vorgegebene Kapazität Lplant der Anlage (englisch "plant") eingezeichnet (Linie unterhalb von Lmax). Die diskreten Zeitabschnitte, für die jeweils eine unterschiedliche vorgegebene Kapazität eingestellt werden kann, betragen im vorliegenden Beispiel immer genau 1 Stunde (1h). D.h., für jeden Zeitwert von 1 Stunde, zum Beispiel zwischen 8.00 Uhr und 9.00 Uhr, zwischen 9.00 Uhr und 10.00 Uhr etc., kann ein anderer Wert für die (Leistungs-)Kapazität der Anlage vorgegeben werden.

Die Zeitabschnitte können jedoch auch anders gewählt sein, zum Beispiel in halben Stunden oder Viertelstunden.

Abhängig von der vorgegebenen Kapazität Lplant versetzt die Anlagensteuerung Einheiten der Anlage rechtzeitig in einen betriebsbereiten Zustand, so dass diese dann gegebenenfalls in Betrieb genommen werden können, also zur zu Verfügung stehenden Kapazität der Anlage beitragen.

Zur Kapazität Lplant der Anlage zählen alle Einheiten, die von der Anlagensteuerung in einem betriebsbereiten Zustand, das heißt insbesondere in ein warmen Zustand versetzt worden sind.

Das Aufwärmen der Elektrolyse-Einheiten dauert nämlich einen bestimmten Zeitraum. Daher ist die Kapazität Lplant zu einer aktuellen Zeit t0 (hier 7.00 Uhr) nur für ein zukünftiges Zeitintervall t1 (hier 20.00 Uhr) bis t2 (hier 7.00 Uhr am Folgetag) einstellbar.

Im vorliegenden Beispiel beträgt diese Vorlaufzeit t1-t0, auch Heizperiode genannt, 13 Stunden, wobei auch deutlich schnellere Zeiten möglich sind. Die Zeit t2, also die Zeit bis zu welcher eine Kapazität in der Zukunft voreingestellt werden kann, hängt von der Programmierung und dem Speicher der Anlagensteuerung ab.

Im vorliegenden Beispiel ist die Zeit t2 so gewählt, dass die Kapazität bis zu 24 Stunden im Voraus einstellbar ist.

Die Kapazität Lplant der Anlage gibt einen oberen Grenzwert für die tatsächlich einstellbare Auslastung Splant der Anlage an.

Weiterhin wird durch die Anlagensteuerung die tatsächliche Auslastung Splant der Anlage eingestellt. Die tatsächliche Auslastung ist ebenfalls für diskrete Zeitabschnitte, hier z.B. 15-Minuten-Abschnitte, einstellbar.

Die Auslastung entspricht der tatsächlichen von der Anlage erbrachten Leistung und somit der Summe der Lasten aller in Betrieb befindlichen Einheiten der Anlage.

Ungenutzte Kapazitäten der in Betrieb befindlichen Einheiten zählen nicht zur Auslastung Splant, sondern nur zur verfügbaren Kapazität Lplant der Anlage.

Zur verfügbaren Kapazität Lplant zählen weiterhin neben den im Betrieb befindlichen Einheiten auch die bereits warmen, also betriebsbereiten Einheiten, unabhängig davon, ob sie unter Betriebsdruck stehen oder nicht, da der Betriebsdruck vergleichsweise schnell aufbaubar ist.

In der Regel stehen Einheiten, bevor sie das erste Mal in Betrieb genommen werden, noch nicht unter Betriebsdruck, während die Einheiten nach einer Außerbetriebnahme zumindest zeitweise noch unter Betriebsdruck stehen.

Die Einstellung der Sollwerte für die Anlagenauslastung Splant kann relativ kurzfristig erfolgen. Zu einem Zeitpunkt t0 kann beispielsweise für ein Zeitintervall ta bis t2 die Auslastung Splant für alle diskreten Zeitabschnitte des Intervalls vorgegeben werden. Die Auslastung Splant muss dabei innerhalb der durch die Anlagenkapazität Lplant vorgegebenen Grenze liegen (und diese wiederum zwischen den maximal/minimal möglichen Kapazitäten Lmax und Lmin).

Die Vorlaufzeit ta für die Einstellung der Anlagenauslastung Splant beträgt im vorliegenden Beispiel 1 Stunde, kann jedoch auch nur annähernd 0 Stunden betragen. D.h., die Auslastung kann quasi in Echtzeit eingestellt werden.

Die Möglichkeit zur Verstellung der Auslastung Splant hängt weiterhin von der Dynamik der Anlage ab, d.h. davon wie schnell innerhalb der Kapazitätsgrenze Lplant weitere Kapazitäten in/außer Betrieb genommen werden können. Mit anderen Worten, wie schnell die Leistung pro Zeit gesteigert oder gesenkt werden kann.

Daraus ergeben sich weitere Grenzen für die Einstellung der Anlagenauslastung, die vom aktuellen Betriebszustand der Anlagenauslastung zum jeweils aktuellen Zeitpunkt abhängen. Diese so genannten Betriebsauslastungsgrenzen sind im vorliegen Diagramm als gestrichelten Linien oberhalb und unterhalb der tatsächlichen Auslastungskennlinie eingezeichnet.

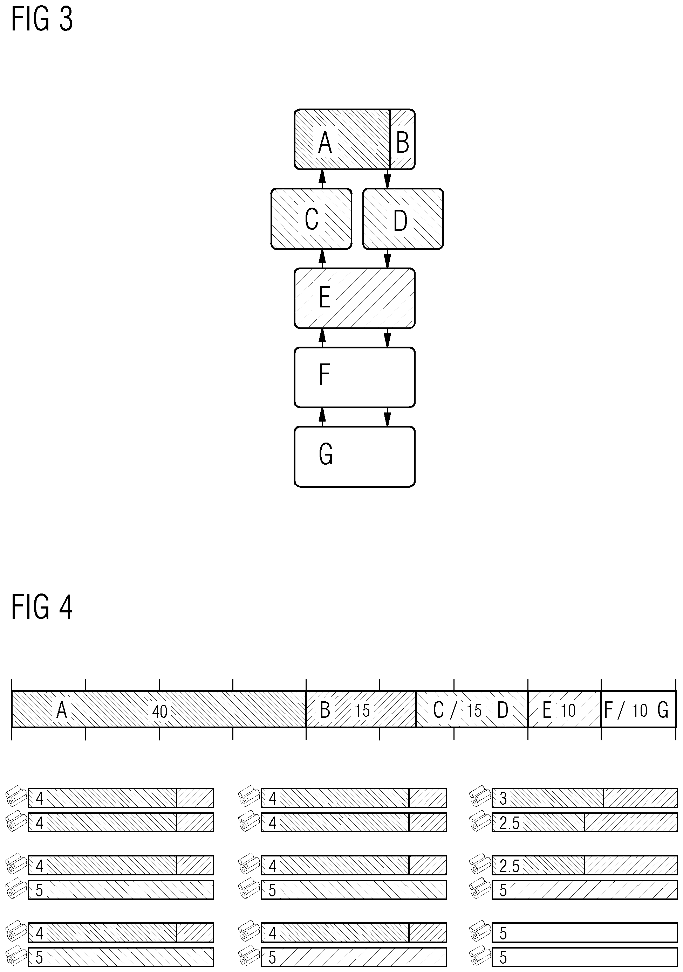

In Figur 3 sind nochmals schematisch die einzelnen Betriebszustände der Elektrolyseeinheit gezeigt, und zu welchen Einstellungsgrößen (Kapazität, Auslastung etc.) diese jeweils zählen.

Ganz oben ist der Betriebszustand "in Betrieb" (A) dargestellt. Elektrolyse-Einheiten in Betrieb zählen zu dem Anteil der Elektrolyseeinheit, der tatsächlich unter Last steht, zur Anlagenauslastung Splant. Teile der Elektrolyse-Einheiten, die nicht unter Last stehen (B), zählen dagegen nur zu verfügbaren Kapazität Lplant.

Elektrolyse-Einheiten, die nicht in Betrieb sind, können sich in einem betriebsbereiten warmen Standby-Zustand C/D mit oder ohne Betriebsdruck befinden. Elektrolyse-Einheiten in einem warmen Standby-Zustand sind bereits auf die erforderliche Betriebstemperatur aufgewärmt und können daher jederzeit in Betrieb genommen werden. Unabhängig davon, ob die Elektrolyse-Einheiten unter Betriebsdruck stehen (warmer Standby mit Betriebsdruck, C) oder nicht unter Betriebsdruck stehen (warmer Standby ohne Betriebsdruck, D) sind diese Elektrolyse-Einheiten schnell in den Betrieb überführbar und zählen damit zur verfügbaren Kapazität der Anlage Lplant.

Ein typischer Betriebsdruck beträgt beispielsweise 30 bar und ein typischer Druck einer Elektrolyseeinheit, die nicht unter Betriebsdruck steht, beispielsweise 7 bar.

Die Betriebstemperaturen betriebsbereiter Elektrolyse-Einheiten betragen bevorzugt über 800 °C.

Wird weniger Kapazität benötigt, sind die Elektrolyse-Einheiten weiteren in einen kalten, nicht betriebsbereiten Standby-Zustand (E) überführbar. Aufgrund der relativ langen Aufwärmzeiten zählen diese dann nicht zur verfügbaren Anlagenkapazität Lplant, können aber mit genügend Vorlaufzeit (t1) durch die Anlagensteuerung in einen betriebsbereiten Zustand versetzt werden, tragen also zur maximal verfügbaren Leistung Lmax der Anlage bei.

Schließlich können Elektrolyse-Einheiten auch vollständig heruntergefahren und ausgeschaltet (F) werden bzw. auch komplett von der Anlagensteuerung getrennt (G) werden, um beispielsweise Wartungs- oder Reparaturarbeiten auszuführen. Diese Elektrolyse-Einheiten stehen der Anlagensteuerungen somit mit ihrer Kapazität nicht zur Verfügung und zählen somit nicht zur maximal möglichen Leistungskapazität der Anlage Lmax.

Da grundsätzlich alle Einheiten in alle weiteren Zustände überführbar, sind mit entsprechender Vorlaufzeit alle vorgenannten Größen änderbar. Die Anlagensteuerung hat jedoch nur Einfluss auf Lplant und Splant.

In Figur 4 wird nun ein konkretes Betriebsszenario einer Anlage beispielhaft erläutert.

Im obigen Balken sind die vorgegebenen Betriebsparameter der Anlage dargestellt und darunter eine beispielhafte Anlage mit Einheitenauslastungen.

Bei der Anlage handelt es sich um eine Flotte aus neun Modulen, die jeweils zwei Einheiten umfassen. Somit umfasst die Anlage insgesamt 18 Einheiten. Jede der Einheiten hat eine mögliche Maximallast von 5 MW, sodass die Anlage insgesamt 90 MW leisten kann.

Im vorliegenden Beispiel befindet sich z.B. eines der Module mit zwei Einheiten in Wartung und ist somit nicht verfügbar.

Das Modul, das außer Betrieb ist, umfasst mit seinen zwei Einheiten insgesamt 10 MW, die somit nicht zur maximalen Kapazität Lmax der Anlage beitragen. Lmax beträgt im Beispiel daher lediglich 80 MW.

Im vorliegenden Beispiel wird der Anlagensteuerung zum betrachteten Zeitpunkt eine Auslastung Splant von 40 MW und eine zur Verfügung stehende Kapazität Lplant von 70 MW vorgegeben.

Daher hat die Anlagensteuerung zwei Einheiten, insgesamt 10 MW, in einen kalten, nicht betriebsbereiten Zustand versetzt.

Die verbleibenden Einheiten sollen im Beispiel möglichst effizient betrieben werden. Daher wird im Beispiel eine Auslastung der einzelnen Einheiten Sunit ("unit" englisch für Einheit) zwischen z.B. 50 und 80 % der maximalen Auslastung Smax der Einheiten von 5 MW angestrebt.

Daher werden von der Anlagensteuerung zum Erreichen der vorgegebenen 40 MW Auslastung (Splant) acht Einheiten mit einer Auslastung von 4 MW (80%), eine Einheit mit einer Auslastung von 3 MW und zwei Einheiten mit einer Auslastung von 2,5 MW (50 %) betrieben.

Die übrigen Kapazitäten der Einheiten in Betrieb, die nicht unter Last stehen, zählen zur verfügbaren Anlagenkapazität (warmer Standby). Somit stehen durch die nicht volle Auslastung der im Betriebszustand befindlichen Elektrolyseeinheit bereits weitere 15 MW Kapazität zur Verfügung.

Zum Erreichen der weiteren 15 MW an verfügbarer Kapazität sind weitere drei Elektrolyse-Einheiten in einem warmen betriebsbereiten Standby-Zustand versetzt. Somit wird insgesamt eine Kapazität Lplant von 70 MW erreicht.

Grundsätzlich sind jedoch verschiedene Steuerungsmodi und - konzepte möglich, die nachfolgend anhand weiterer Figuren erläutert werden.

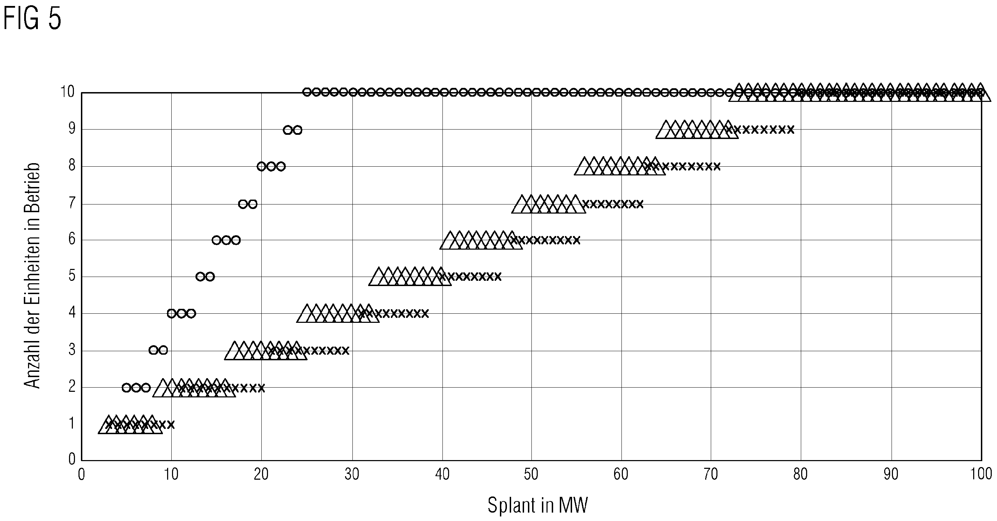

Das Diagramm in Figur 5 gibt einen Überblick über mögliche Auslastungsszenarien der verschiedenen Elektrolyse-Einheiten bei einer vorgegebenen Auslastung Splant der Anlage bei verschiedenen Steuerungsmodi-Szenarien.

Im gezeigten Beispiel umfasst eine Anlage 10 Elektrolyse-Einheiten mit einer jeweiligen Maximallast von 10 MW, **d.h.** eine theoretisch mögliche maximale Last der Anlage beträgt 100 MW (Lmax).

Anhand der x-Achse ist nun eine vorgegebene Auslastung Splant und anhand der y-Achse die Anzahl an Einheiten in Betrieb dargestellt.

Durch kleine Kreise ist graphisch ein erster Steuerungsmodus dargestellt, der auf eine maximale dynamische Flexibilität der Anlagensteuerung ausgerichtet ist. Ziel ist es hier, dass möglichst viele Einheiten möglichst nahe bei minimaler Last betrieben werden, um eine hohe Dynamik bei einer Erhöhung der Anlagenauslastung zu ermöglichen. D.h., die Anlagenauslastung kann durch eine höhere Auslastung der bereits im Betriebszustand befindlichen Einheiten sehr schnell und flexibel erhöht werden.

Eine minimale Last Smin, bei der eine Einheit betrieben werden kann, soll hier beispielsweise 2,5 MW, also 25 % der maximalen Last betragen.

Ist daher beispielsweise eine Auslastung Splant der Anlage von 3 oder 4 MW vorgegeben, befindet sich nur eine Elektrolyseeinheit mit entsprechender Auslastung im Betriebszustand. Sind 5, 6 oder 7 MW vorgegeben, befinden sich zwei Elektrolyse-Einheiten im Betriebszustand (bei 7 MW beispielsweise eine Einheit mit 2,5 MW und eine Einheit mit 4,5 MW). Ab 8 MW werden drei Elektrolyse-Einheiten in Betrieb genommen etc. Bei 25 MW Splant sind bereits alle 10 Einheiten mit einer Last von jeweils 2,5 MW in Betrieb. Ist eine höhere Auslastung vorgegeben, wird die Last der einzelnen Elektrolysemodule entsprechend gesteigert bis zur vollen Last bei 100 MW.

Die Kreuze stellen weiterhin graphisch einen "dritter Steuerungsmodus" genannten Modus dar, in dem eine maximale Last Smax der Elektrolyse-Einheiten angestrebt wird, sodass möglichst wenige Elektrolyse-Einheiten in den Betriebszustand versetzt werden müssen und somit möglichst viele Einheiten/Module der Anlage geschont werden (weniger Degradation der Einheiten, die nicht in Betrieb sind). Bei einer vorgegebenen Leistung Splant bis zu 10 MW ist somit der Betrieb nur einer Elektrolyseeinheit notwendig. Zwischen 11 und 20 MW werden zwei Elektrolyse-einheiten betrieben etc.

Schließlich wird durch die Dreiecke graphisch ein zweiter Steuerungsmodus dargestellt. Das Ziel des zweiten Steuerungsmodus ist es, die Elektrolysemodule möglichst effizient zu betreiben. Beispielhaft darf dafür eine Auslastung Seff von 80 % der Maximalllast der Elektrolysemodule nicht überschritten werden. Die Anzahl der betriebenen Einheiten je nach Auslastung Splant ist wieder entsprechend im Diagramm dargestellt. Der Wert Seff kann jedoch auch anders als 80 % gewählt werden oder auf einen vorgegebenen Wert festgelegt werden.

Mit den verschiedenen Steuerungsmodi können auch verschiedene Steuerungskonzepte bezüglich dem Betrieb von Einheiten verschiedener Module verbunden sein. Bei angestrebter hoher Flexibilität der Anlagensteuerung macht es Sinn, möglichst viele Einheiten verschiedener Module zu aktivieren (z.B. in Kombination mit dem ersten Steuerungsmodus), sodass die Peripherie möglichst vieler Module bereits betriebsbereit ist und die übrigen Einheiten der Module schnell in den Betriebszustand versetzt werden können.

Energieeffizienter bzw. schonender in Bezug auf eine Degradierung der Anlage ist es hingegen, möglichst wenige Module in einen betriebsbereiten Zustand zu versetzen und somit zuerst alle Einheiten bereits betriebener Module in den Betriebszustand zu versetzen. Dieses Konzept bietet sich insbesondere in Verbindung mit dem zweiten oder dritten Steuerungsmodus an.

### Bezugszeichen

- 1: Elektrolyse-Anlage
- 2: Elektrolyse-Module
- 3: Elektrolyse-Einheiten
- 4: Modul-Steuerungen
- 5: Anlagensteuerung
- 6: Separates Sicherheitssteuerungsnetzwerk

- A: in Betrieb, unter Last
- B: in Betrieb, nicht unter Last
- C: Warmer Standby, kein Betriebsdruck
- D: Warmer Standby, Betriebsdruck
- E: kalter Standby, kein Betriebsdruck
- F: ausgeschaltet
- G: in Reparatur/ Wartung

## Patentansprüche

1. Steuerungsverfahren zur Einstellung der Auslastung einer Elektrolyse-Anlage (1) mittels einer zentralen Anlagensteuerung (5),
wobei die Anlagensteuerung (5) so beschaffen ist,
dass zu einem Zeitpunkt t0 innerhalb der physikalischen Grenzen Lmin bis Lmax der Elektrolyse-Anlage (1) eine maximale zur Verfügung stehende Kapazität Lplant der Elektrolyse-Anlage (1) für erste diskrete Zeitabschnitte eines Zeitintervalls t1 bis t2 als ein erster Sollwert einstellbar ist,
dass zu dem Zeitpunkt t0 innerhalb der maximal zur Verfügung stehenden Kapazität Lplant die Auslastung der Elektrolyse-Anlage (1) Splant für zweite diskrete Zeitabschnitte eines Zeitintervalls ta bis t2 als ein zweiter Sollwert einstellbar ist,
wobei t2>t1>ta≥t0 gilt, und wobei eine elektrische Leistung oder eine Menge an Wasserstoff der Anlagensteuerung (5) als der erste und der zweite Sollwert vorgegeben wird.

2. Steuerungsverfahren nach Anspruch 1, wobei eine Menge an Wasserstoff der Anlagensteuerung (5) als der erste und der zweite Sollwert vorgegeben wird und wobei ta > t0 gilt.

3. Steuerungsverfahren nach einem der Ansprüche 1 bis 2, wobei die Anlagensteuerung (5) umschaltbar ist, sodass entweder eine elektrische Leistung oder eine Menge an Wasserstoff der Anlagensteuerung (5) als der erste und der zweite Sollwert vorgegeben wird.

4. Steuerungsverfahren nach einem der Ansprüche 1 bis 3, wobei die Anlagensteuerung (5) abhängig von dem eingestellten ersten Sollwert für die ersten diskreten Zeitabschnitte einen Zustand einer erforderlichen Anzahl an Elektrolyse-Einheiten (3) von einem nicht-betriebsbereiten kalten Standby-Zustand in einen betriebsbereiten warmen Standby-Zustand mit oder ohne Betriebsdruck zum Erhöhen der Kapazität Lplant versetzt oder von dem betriebsbereiten warmen Standby-Zustand mit oder ohne Betriebsdruck in den nicht-betriebsbereiten kalten Standby-Zustand zum Absenken der Kapazität Lplant versetzt, wobei sich die jeweilige Auswahl der Elektrolyse-Einheiten (3) für den Wechsel des Zustands an den aktuellen Leistungs- und Betriebsmerkmalen der Elektrolyse-Einheiten (3) ausrichtet.

5. Steuerungsverfahren nach Anspruch 4, wobei die Anlagensteuerung (5) abhängig von dem eingestellten zweiten Sollwert für die zweiten diskreten Zeitabschnitte eine erforderliche Anzahl an Elektrolyse-Einheiten (3) von dem betriebsbereiten warmen Standby-Zustand mit oder ohne Betriebsdruck in einen Betriebszustand zum Erhöhen der Auslastung Splant versetzt oder von dem Betriebszustand in den betriebsbereiten warmen Standby-Zustand mit oder ohne Betriebsdruck zum Absenken der Auslastung Splant versetzt, wobei sich die jeweilige Auswahl der Elektrolyse-Einheiten (3) für den Wechsel des Zustands an den aktuellen Leistungs- und Betriebsmerkmalen der Elektrolyse-Einheiten (3) ausrichtet.

6. Steuerungsverfahren nach Anspruch 5, wobei die Anlagensteuerung (5) abhängig von dem eingestellten zweiten Sollwert eine erforderliche Auslastung Sunit der einzelnen im Betriebszustand befindlichen Elektrolyse-Einheiten (3) einstellt.

7. Steuerungsverfahren nach Anspruch 6, wobei ein erster Steuerungsmodus einstellbar ist, dass die Anlagensteuerung (5) so viele Elektrolyse-Einheiten (3) in den Betriebszustand versetzt, dass die Auslastung Sunit möglichst vieler der im Betriebszustand befindlichen Elektrolyse-Einheiten (3) auf eine vorgegebene minimale Auslastung Smin einstellbar ist und/oder die Auslastung Sunit der im Betriebszustand befindlichen Elektrolyse-Einheiten (3) möglichst nah an dieser vorgegebenen minimalen Auslastung Smin einstellbar ist.

8. Steuerungsverfahren nach Anspruch 6, wobei ein zweiter Steuerungsmodus einstellbar ist, dass die Anlagensteuerung (5) so viele Elektrolyse-Einheiten (3) in den Betriebszustand versetzt, dass die Auslastung Sunit möglichst vieler der im Betriebszustand befindlichen Elektrolyse-Einheiten (3) auf eine vorgegebene effiziente Auslastung Seff einstellbar ist und/oder die Auslastung Sunit der im Betriebszustand befindlichen Elektrolyse-Einheiten (3) möglichst nah an dieser und/oder möglichst nah an dieser, aber unterhalb dieser, vorgegebenen effizienten Auslastung Seff einstellbar ist.

9. Steuerungsverfahren nach Anspruch 6, wobei ein dritter Steuerungsmodus einstellbar ist, dass die Anlagensteuerung (5) so viele Elektrolyse-Einheiten (3) in den Betriebszustand versetzt, dass die Auslastung Sunit möglichst vieler der im Betriebszustand befindlichen Elektrolyse-Einheiten (3) auf eine vorgegebene maximale zulässige Auslastung Smax einstellbar ist und/oder die Auslastung Sunit der im Betriebszustand befindlichen Elektrolyse-Einheiten (3) möglichst nah an dieser vorgegebenen maximale Auslastung Smax einstellbar ist.

10. Steuerungsverfahren nach einem der Ansprüche 7 bis 9, wobei mehrere Elektrolyse-Einheiten (3) zu einem Elektrolyse-Modul (2) zusammengefasst sind, wobei die Anlagensteuerung (5) Elektrolyse-Einheiten (3) möglichst weniger unterschiedlicher Elektrolyse-Module in den Betriebszustand versetzt.

11. Steuerungsverfahren nach einem der Ansprüche 7 bis 9, wobei mehrere Elektrolyse-Einheiten (3) zu einem Elektrolyse-Modul (2) zusammengefasst sind, wobei die Anlagensteuerung (5) Elektrolyse-Einheiten (3) möglichst vieler unterschiedlicher Elektrolyse-Module (2) in den Betriebszustand versetzt.

12. Steuerungsverfahren nach einem der Ansprüche 5 bis 11, wobei die Anlagensteuerung (5) nach einer vorgegebenen maximalen Standbyzeit tmax oder in Abhängigkeit von vorgegebenen Grenzwerten für Einheitenparameter der jeweiligen Elektrolyse-Einheiten (3), die Elektrolyse-Einheiten (3) im betriebsbereiten warmen Standby-Zustand unter Beibehaltung von Betriebsdruck automatisch zurück in den Betriebszustand versetzt und dafür, wenn erforderlich, andere Elektrolyse-Einheiten (3) im Betriebszustand automatisch in den warmen Standby-Zustand unter Beibehaltung von Betriebsdruck versetzt.

13. Steuerungsverfahren nach einem der Ansprüche 5 bis 12, wobei die Anlagensteuerung (5) nach einer vorgegebenen Logik eine oder mehrere Elektrolyse-Einheiten (3) im betriebsbereiten warmen Standby-Zustand in den Betriebszustand versetzt und dafür dieselbe Anzahl an Elektrolyse-Einheiten (3) im Betriebszustand in den warmen Standby-Zustand unter Beibehaltung von Betriebsdruck versetzt.

14. Elektrolyse-Anlage (1) umfassend eine Anlagensteuerung (5) zur Einstellung der Auslastung der Elektrolyse-Anlage (1) und weiterhin umfassend mehrere Elektrolyse-Einheiten (3), wobei die Anlagensteuerung (5) so beschaffen ist,
dass zu einem Zeitpunkt t0 innerhalb der physikalischen Grenzen Lmin bis Lmax der Elektrolyse-Anlage (1) eine maximale zur Verfügung stehende Kapazität Lplant der Elektrolyse-Anlage (1) für erste diskrete Zeitabschnitte eines Zeitintervalls t1 bis t2 als ein erster Sollwert einstellbar ist,
dass zu dem Zeitpunkt t0 innerhalb der maximal zur Verfügung stehenden Kapazität Lplant die Auslastung der Elektrolyse-Anlage (1) Splant für zweite diskrete Zeitabschnitte eines Zeitintervalls ta bis t2 als ein zweiter Sollwert einstellbar ist,
wobei t2>t1>ta≥t0 gilt,
wobei eine elektrische Leistung oder eine Menge an Wasserstoff der Anlagensteuerung (5) als der erste und der zweite Sollwert vorgegeben wird,
wobei die Anlagensteuerung (5) weiterhin so beschaffen ist, dass sie abhängig von dem eingestellten ersten Sollwert für die ersten diskreten Zeitabschnitte eine erforderliche Anzahl an Elektrolyse-Einheiten (3) von einem nicht-betriebsbereiten kalten Standby-Zustand in einen betriebsbereiten warmen Standby-Zustand zum Erhöhen der Kapazität Lplant versetzt oder von dem betriebsbereiten warmen Standby-Zustand in den nicht-betriebsbereiten kalten Standby-Zustand zum Absenken der Kapazität Lplant versetzt, und
wobei die Anlagensteuerung (5) weiterhin so beschaffen ist, dass sie abhängig von dem eingestellten zweiten Sollwert für die zweiten diskreten Zeitabschnitte eine erforderliche Anzahl an Elektrolyse-Einheiten (3) von dem betriebsbereiten warmen Standby-Zustand in einen Betriebszustand zum Erhöhen der Auslastung Splant versetzt oder von dem Betriebszustand in den betriebsbereiten warmen Standby-Zustand unter Beibehaltung von Betriebsdruck zum Absenken der Auslastung Splant versetzt.

15. Elektrolyse-Anlage (1) nach Anspruch 14, die bevorzugt eine alkalische Elektrolyse-Anlage (1) oder eine FeststoffElektrolyse-Anlage (1) ist, wobei die Elektrolyse-Einheiten (3) Stapel an Elektrolysezellen umfassen, wobei jeweils eine definierte Anzahl an Elektrolyse-Einheiten (3) in einem Elektrolyse-Modul (2) zusammengefasst sind,
wobei die Elektrolyse-Module (2) weiterhin Modulsteuerungen (4) aufweisen, durch die die Elektrolyse-Einheiten (3) ansteuerbar sind, wobei die Modulsteuerungen (4) durch die Anlagensteuerung (5) ansteuerbar sind.

## Geänderte Patentansprüche

### Geänderte Patentansprüche gemäss Regel 137(2) EPÜ.

1. Steuerungsverfahren zur Einstellung der Auslastung einer Elektrolyse-Anlage (1) mittels einer zentralen Anlagensteuerung (5),
**dadurch gekennzeichnet, dass**
die Anlagensteuerung (5) so beschaffen ist,
dass zu einem Zeitpunkt t0 innerhalb von physikalischen Grenzen, Lmin bis Lmax, der Elektrolyse-Anlage (1) eine maximale zur Verfügung stehende Kapazität, Lplant, der Elektrolyse-Anlage (1) für erste diskrete Zeitabschnitte eines Zeitintervalls t1 bis t2 als ein erster Sollwert einstellbar ist,
dass zu dem Zeitpunkt t0 innerhalb der maximal zur Verfügung stehenden Kapazität, Lplant, die Auslastung der Elektrolyse-Anlage (1), Splant, für zweite diskrete Zeitabschnitte eines Zeitintervalls ta bis t2 als ein zweiter Sollwert einstellbar ist,
wobei t2>t1>ta≥t0 gilt, und wobei eine elektrische Leistung oder eine Menge an Wasserstoff der Anlagensteuerung (5) als der erste und der zweite Sollwert vorgegeben wird.

2. Steuerungsverfahren nach Anspruch 1, wobei eine Menge an Wasserstoff der Anlagensteuerung (5) als der erste und der zweite Sollwert vorgegeben wird und wobei ta > t0 gilt.

3. Steuerungsverfahren nach einem der Ansprüche 1 bis 2, wobei die Anlagensteuerung (5) umschaltbar ist, sodass entweder eine elektrische Leistung oder eine Menge an Wasserstoff der Anlagensteuerung (5) als der erste und der zweite Sollwert vorgegeben wird.

4. Steuerungsverfahren nach einem der Ansprüche 1 bis 3, wobei die Anlagensteuerung (5) abhängig von dem eingestellten ersten Sollwert für die ersten diskreten Zeitabschnitte einen Zustand einer erforderlichen Anzahl an Elektrolyse-Einheiten (3) von einem nicht-betriebsbereiten kalten Standby-Zustand in einen betriebsbereiten warmen Standby-Zustand mit oder ohne Betriebsdruck zum Erhöhen der Kapazität, Lplant, versetzt oder von dem betriebsbereiten warmen Standby-Zustand mit oder ohne Betriebsdruck in den nicht-betriebsbereiten kalten Standby-Zustand zum Absenken der Kapazität, Lplant, versetzt, wobei sich die jeweilige Auswahl der Elektrolyse-Einheiten (3) für den Wechsel des Zustands an den aktuellen Leistungs- und Betriebsmerkmalen der Elektrolyse-Einheiten (3) ausrichtet.

5. Steuerungsverfahren nach Anspruch 4, wobei die Anlagensteuerung (5) abhängig von dem eingestellten zweiten Sollwert für die zweiten diskreten Zeitabschnitte eine erforderliche Anzahl an Elektrolyse-Einheiten (3) von dem betriebsbereiten warmen Standby-Zustand mit oder ohne Betriebsdruck in einen Betriebszustand zum Erhöhen der Auslastung, Splant, versetzt oder von dem Betriebszustand in den betriebsbereiten warmen Standby-Zustand mit oder ohne Betriebsdruck zum Absenken der Auslastung, Splant, versetzt, wobei sich die jeweilige Auswahl der Elektrolyse-Einheiten (3) für den Wechsel des Zustands an den aktuellen Leistungs-und Betriebsmerkmalen der Elektrolyse-Einheiten (3) ausrichtet.

6. Steuerungsverfahren nach Anspruch 5, wobei die Anlagensteuerung (5) abhängig von dem eingestellten zweiten Sollwert eine erforderliche Auslastung Sunit der einzelnen im Betriebszustand befindlichen Elektrolyse-Einheiten (3) einstellt.

7. Steuerungsverfahren nach Anspruch 6, wobei ein erster Steuerungsmodus einstellbar ist, dass die Anlagensteuerung (5) so viele Elektrolyse-Einheiten (3) in den Betriebszustand versetzt, dass die Auslastung Sunit möglichst vieler der im Betriebszustand befindlichen Elektrolyse-Einheiten (3) auf eine vorgegebene minimale Auslastung Smin einstellbar ist und/oder die Auslastung Sunit der im Betriebszustand befindlichen Elektrolyse-Einheiten (3) möglichst nah an dieser vorgegebenen minimalen Auslastung Smin einstellbar ist.

8. Steuerungsverfahren nach Anspruch 6, wobei ein zweiter Steuerungsmodus einstellbar ist, dass die Anlagensteuerung (5) so viele Elektrolyse-Einheiten (3) in den Betriebszustand versetzt, dass die Auslastung Sunit möglichst vieler der im Betriebszustand befindlichen Elektrolyse-Einheiten (3) auf eine vorgegebene effiziente Auslastung Seff einstellbar ist und/oder die Auslastung Sunit der im Betriebszustand befindlichen Elektrolyse-Einheiten (3) möglichst nah an dieser und/oder möglichst nah an dieser, aber unterhalb dieser, vorgegebenen effizienten Auslastung Seff einstellbar ist.

9. Steuerungsverfahren nach Anspruch 6, wobei ein dritter Steuerungsmodus einstellbar ist, dass die Anlagensteuerung (5) so viele Elektrolyse-Einheiten (3) in den Betriebszustand versetzt, dass die Auslastung Sunit möglichst vieler der im Betriebszustand befindlichen Elektrolyse-Einheiten (3) auf eine vorgegebene maximale zulässige Auslastung, Smax, einstellbar ist und/oder die Auslastung Sunit der im Betriebszustand befindlichen Elektrolyse-Einheiten (3) möglichst nah an dieser vorgegebenen maximale Auslastung, Smax, einstellbar ist.

10. Steuerungsverfahren nach einem der Ansprüche 7 bis 9, wobei mehrere Elektrolyse-Einheiten (3) zu einem Elektrolyse-Modul (2) zusammengefasst sind, wobei die Anlagensteuerung (5) Elektrolyse-Einheiten (3) möglichst weniger unterschiedlicher Elektrolyse-Module in den Betriebszustand versetzt.

11. Steuerungsverfahren nach einem der Ansprüche 7 bis 9, wobei mehrere Elektrolyse-Einheiten (3) zu einem Elektrolyse-Modul (2) zusammengefasst sind, wobei die Anlagensteuerung (5) Elektrolyse-Einheiten (3) möglichst vieler unterschiedlicher Elektrolyse-Module (2) in den Betriebszustand versetzt.

12. Steuerungsverfahren nach einem der Ansprüche 5 bis 11, wobei die Anlagensteuerung (5) nach einer vorgegebenen maximalen Standbyzeit tmax oder in Abhängigkeit von vorgegebenen Grenzwerten für Einheitenparameter der jeweiligen Elektrolyse-Einheiten (3), die Elektrolyse-Einheiten (3) im betriebsbereiten warmen Standby-Zustand unter Beibehaltung von Betriebsdruck automatisch zurück in den Betriebszustand versetzt und dafür, wenn erforderlich, andere Elektrolyse-Einheiten (3) im Betriebszustand automatisch in den warmen Standby-Zustand unter Beibehaltung von Betriebsdruck versetzt.

13. Steuerungsverfahren nach einem der Ansprüche 5 bis 12, wobei die Anlagensteuerung (5) nach einer vorgegebenen Logik eine oder mehrere Elektrolyse-Einheiten (3) im betriebsbereiten warmen Standby-Zustand in den Betriebszustand versetzt und dafür dieselbe Anzahl an Elektrolyse-Einheiten (3) im Betriebszustand in den warmen Standby-Zustand unter Beibehaltung von Betriebsdruck versetzt.

14. Elektrolyse-Anlage (1) umfassend eine zentrale Anlagensteuerung (5) zur Einstellung der Auslastung der Elektrolyse-Anlage (1) mittels des Steuerungsverfahrens nach Anspruch 1 und weiterhin umfassend mehrere Elektrolyse-Einheiten (3),
wobei die Anlagensteuerung (5) so beschaffen ist,
dass zu einem Zeitpunkt t0 innerhalb von physikalischen Grenzen Lmin bis Lmax der Elektrolyse-Anlage (1) eine maximale zur Verfügung stehende Kapazität, Lplant, der Elektrolyse-Anlage (1) für erste diskrete Zeitabschnitte eines Zeitintervalls t1 bis t2 als ein erster Sollwert einstellbar ist,
dass zu dem Zeitpunkt t0 innerhalb der maximal zur Verfügung stehenden Kapazität, Lplant, die Auslastung der Elektrolyse-Anlage (1), Splant, für zweite diskrete Zeitabschnitte eines Zeitintervalls ta bis t2 als ein zweiter Sollwert einstellbar ist,
wobei t2>t1>ta≥t0 gilt,
wobei eine elektrische Leistung oder eine Menge an Wasserstoff der Anlagensteuerung (5) als der erste und der zweite Sollwert vorgegeben wird,
wobei die Anlagensteuerung (5) weiterhin so beschaffen ist, dass sie abhängig von dem eingestellten ersten Sollwert für die ersten diskreten Zeitabschnitte eine erforderliche Anzahl an Elektrolyse-Einheiten (3) von einem nicht-betriebsbereiten kalten Standby-Zustand in einen betriebsbereiten warmen Standby-Zustand zum Erhöhen der Kapazität, Lplant, versetzt oder von dem betriebsbereiten warmen Standby-Zustand in den nicht-betriebsbereiten kalten Standby-Zustand zum Absenken der Kapazität, Lplant, versetzt, und
wobei die Anlagensteuerung (5) weiterhin so beschaffen ist, dass sie abhängig von dem eingestellten zweiten Sollwert für die zweiten diskreten Zeitabschnitte eine erforderliche Anzahl an Elektrolyse-Einheiten (3) von dem betriebsbereiten warmen Standby-Zustand in einen Betriebszustand zum Erhöhen der Auslastung, Splant, versetzt oder von dem Betriebszustand in den betriebsbereiten warmen Standby-Zustand unter Beibehaltung von Betriebsdruck zum Absenken der Auslastung, Splant, versetzt.

15. Elektrolyse-Anlage (1) nach Anspruch 14, die bevorzugt eine alkalische Elektrolyse-Anlage (1) oder eine Feststoff-Elektrolyse-Anlage (1) ist, wobei die Elektrolyse-Einheiten (3) Stapel an Elektrolysezellen umfassen, wobei jeweils eine definierte Anzahl an Elektrolyse-Einheiten (3) in einem Elektrolyse-Modul (2) zusammengefasst sind,
wobei die Elektrolyse-Module (2) weiterhin Modulsteuerungen (4) aufweisen, durch die die Elektrolyse-Einheiten (3) ansteuerbar sind, wobei die Modulsteuerungen (4) durch die Anlagensteuerung (5) ansteuerbar sind.
